# EUROPEAN PATENT SPECIFICATION

(11) **EP 2 603 379 B1**
(45) Date of publication and mention of the grant of the patent: **20.12.2017**
(21) Application number: 11745878.6
(22) Date of filing: 08.08.2011
(51) Int. Cl.: B32B 27/08, B32B 27/12, C08L 77/02, C08L 77/06, B32B 27/34, C08J 5/04

(54) **POLYAMIDE COMPOSITE STRUCTURES AND PROCESSES FOR THEIR PREPARATION**
POLYAMIDVERBUNDSTRUKTUREN UND VERFAHREN ZU IHRER HERSTELLUNG
STRUCTURES COMPOSITES POLYAMIDES ET LEURS PROCÉDÉS DE PRÉPARATION

(30) Priority: 10.08.2010 US 372237 P
(43) Date of publication of application: 19.06.2013
(60) Divisional application: 17196180.8
(73) Proprietor: E. I. du Pont de Nemours and Company, Wilmington, DE 19898 (US)
(72) Inventor: WAKEMAN, Martyn Douglas, CH-1196 Gland (CH); KIRCHNER, Olaf, Norbert, CH-1272 Genolier (CH)
(74) Representative: Heinemann, Monica
(86) International application number: PCT/US2011/046911
(87) International publication number: WO 2012/021435

(56) References cited:
- EP-A1- 0 875 522
- US-A- 5 824 763
- US-A1- 2008 008 879

## Description

### CROSS REFERENCE TO RELATED APPLICATIONS

This application claims the benefit of U.S. Provisional Application No. 61/372,237, filed August 10, 2010.

### FIELD OF THE INVENTION

The recited invention relates to the field of polyamide composite structures, overmolded composite structures, and processes for their preparation.

### BACKGROUND OF THE INVENTION

With the aim of replacing metal parts for weight saving and cost reduction while having comparable or superior mechanical performance, structures based on composite materials comprising a polymer matrix containing a fibrous material have been developed. With this growing interest, fiber reinforced plastic composite structures have been designed because of their excellent physical properties resulting from the combination of the fibrous material and the polymer matrix and are used in various end-use applications. Manufacturing techniques have been developed for improving the impregnation of the fibrous material with a polymer matrix to optimize the properties of the composite structure.
In highly demanding applications, such as structural parts in automotive and aerospace applications, composite materials are desired due to a unique combination of lightweight, high strength and temperature resistance.

High performance composite structures can be obtained using thermosetting resins or thermoplastic resins as the polymer matrix. Thermoplastic-based composite structures present several advantages over thermoset-based composite structures such as, for example, the fact that they can be post-formed or reprocessed by the application of heat and pressure, that a reduced time is needed to make the composite structures because no curing step is required, and their increased potential for recycling. Indeed, the time consuming chemical reaction of cross-linking for thermosetting resins (curing) is not required during the processing of thermoplastics. Among thermoplastic resins, polyamides are particularly well suited for manufacturing composite structures. Thermoplastic polyamide compositions are desirable for use in a wide range of applications including parts used in automobiles, electrical/electronic parts, household appliances and furniture because of their good mechanical properties, heat resistance, impact resistance and chemical resistance and because they may be conveniently and flexibly molded into a variety of articles of varying degrees of complexity and intricacy. US 4,255,219 discloses a thermoplastic sheet material useful in forming composites. The disclosed thermoplastic sheet material is made of polyamide 6 and a dibasic carboxylic acid or anhydride or esters thereof and is formed into a composite by layering the sheet with at least one reinforcing mat of long glass fibers and heating under pressure. FR 2,158,422 discloses a composite structure made of a low molecular weight polyamide matrix and reinforcing fibers. Int'l. Pat. App. Pub. No. WO 2010/034771 discloses composite structures based on non-evolutive low molecular weight polyamide resins having amine end groups or acid end groups equal to or less than 20 meq/kg. Int'I. Pat. App. Pub. No. WO 2007/149300 discloses a semi-aromatic polyamide composite article comprising a component having a fiber-reinforced material with a polyamide composition, an overmolded component comprising a polyamide composition, and an optional tie layer therebetween, wherein at least one of the polyamide compositions is a semi-aromatic polyamide composition.

During the manufacture of composite structures, the surface of the composite is in contact with metal pieces such as plates for batch press consolidation, rolls for calendering type lamination, foils for continuous compression molding, and steel belts during double belt press lamination. For example, during lamination, heat and pressure are applied to the fibrous material and the polymer matrix so that the fibrous material is impregnated by the polymer matrix, *i.e.* the polymer matrix embeds the fibrous material so as to form an interpenetrating network of fibrous material substantially surrounded by the polymer matrix. A lamination process typically includes applying heat and pressure through opposing belts or rolls made of metal. It may happen that the surface of the so-manufactured composite structures sticks or adheres to the metal belts or rolls thus resulting in an increase of the complexity of the manufacture and an increase of the overall manufacturing process. In addition, the composite structure may suffer from chemically or physically uneven surface due to deposits from polymer residues transferred from the belts or rolls, as well as an unaesthetic appearance, including variations of gloss across the surface. Where belt sticking occurs, the lamination conditions may need to be modifed such as a lower exit temperature, reducing lamination rates, or the increased use of release agents, together with potentially increased belt cleaning or machine down time.

There is a need for polyamide-based composite structures having a surface made of a polyamide composition that does not stick or adhere to metal pieces during their manufacture.

It has been surprisingly found that the above mentioned problems can be overcome by composite structures having a surface, which surface has at least a portion made of a surface resin composition comprising one or more polyamides having an excess of amine end groups such that the ratio of the amine end groups to the acid end groups (amine:acid or NH₂:COOH) is at least 1.5:1.0.

### SUMMARY OF THE INVENTION

Described herein are composite structures having a surface, which surface has at least a portion made of a surface resin composition comprising one or more polyamides having an excess of amine end groups such that the ratio of the amine end groups to the acid end groups is at least 1.5:1.0, and comprising a fibrous material selected from non-woven structures, textiles, fibrous battings and combinations thereof, said fibrous material being impregnated with a matrix resin composition comprising one or more polyamide, wherein the one or more polyamides are independently selected from the group consisting of semi-aromatic polyamide resins and a mixture thereof with fully aliphatic polyamide resins. Also described herein are processes for making the composite structure. The processes for making the composite structure described above comprise a step of i) impregnating with a matrix resin composition the fibrous material, wherein at least a portion of the surface of the composite structure is made of the surface resin composition.

Also described herein are uses of a surface resin composition comprising one or more polyamides having an excess of amine end groups such that the ratio of the amine end groups to the acid end groups is at least 1.5:1.0 described herein in the manufacture of a composite structure having a surface, which surface has at least a portion made of the surface resin composition and comprising a fibrous material selected from non-woven structures, textiles, fibrous battings and combinations thereof, said fibrous material being impregnated with a matrix resin composition comprising one or more polyamides for decreasing the sticking or adhesion of the surface of the composite structure onto a metal piece.

Also described herein are overmolded composite structures comprising i) a first component having a surface, which surface has at least a portion made of the surface resin composition described herein, and comprising the fibrous material selected from non-woven structures, textiles, fibrous battings and combinations thereof, said fibrous material being impregnated with the matrix resin composition described herein, and ii) a second component comprising an overmolding resin composition comprising one or more polyamides,
wherein said second component is adhered to said first component over at least a portion of the surface of said first component.

Also described herein are processes for making the overmolded composite structures described herein. The process comprises a step of overmolding the composite structure described herein with the overmolding resin composition.

### DETAILED DESCRIPTION

### Definitions

The following definitions are to be used to interpret the meaning of the terms discussed in the description and recited in the claims.

As used herein, the article "a" indicates one as well as more than one and does not necessarily limit its referent noun to the singular.

As used herein, the terms "about" and "at or about" mean that the amount or value in question may be the value designated or some other value about the same. The phrase is intended to convey that similar values promote equivalent results or effects.

The following list exemplifies the abbreviations used to identify monomers and repeat units in polyamides (PA):
- HMD: hexamethylene diamine (or 6 when used in combination with a diacid)
- DMD: Decamethylenediamine
- DDMD: Dodecamethylenediamine
- MXD: Meta-Xylylene Diamine
- I: Isophthalic acid
- TMD: Tetramethylenediamine
- T: Terephthalic acid
- 46: polymer repeat unit formed from TMD and adipic acid
- 6: polymer repeat unit formed from ε-caprolactam
- 66: polymer repeat unit formed from HMD and AA
- 610: polymer repeat unit formed from HMD and decanedioic acid
- 612: polymer repeat unit formed from HMD and dodecanedioic acid
- 613: polymer repeat unit formed from HMD and tridecanedioic acid
- 614: polymer repeat unit formed from HMD and tetradecanedioic acid
- 615: polymer repeat unit formed from HMD and pentadecanedioic acid
- 616: polymer repeat unit formed from HMD and hexadecanoic acid
- 10: polymer repeat unit formed from 11-aminodecanoic acid
- 1010: polymer repeat unit formed from DMD and decanedioic acid
- 1012: polymer repeat unit formed from DMD and dodecanedioic acid
- 1013: polymer repeat unit formed from DMD and tridecanedioic acid
- 1014: polymer repeat unit formed from DMD and tetradecanedioic acid
- 11: polymer repeat unit formed from 11-aminoundecanoic acid
- 12: polymer repeat unit formed from 12-aminododecanoic acid
- 1210: polymer repeat unit formed from DDMD and decanedioic acid
- 1212: polymer repeat unit formed from DDMD and dodecanedioic acid
- 1213: polymer repeat unit formed from DDMD and tridecanedioic acid
- 1214: polymer repeat unit formed from DDMD and tetradecanedioic acid

In repeat units comprising a diamine and a dicarboxylic acid, the diamine is designated first. Repeat units derived from other amino acids or lactams are designated as single numbers designating the number of carbon atoms.

### COMPOSITE STRUCTURES

The composite structures described herein comprise a fibrous material that is impregnated with a matrix resin composition comprising one or more polyamides. At least a portion of the surface of the composite structure is made of a surface resin composition comprising one or more polyamides having an excess of amine end groups such that the ratio of the amine end groups to the acid end groups (amine:acid or NH₂:COOH) is at least 1.5:1.0.

### Fibrous Material

For purposes herein, "a fibrous material being impregnated with a matrix resin composition" means that the matrix resin composition encapsulates and embeds the fibrous material so as to form an interpenetrating network of fibrous material substantially surrounded by the matrix resin composition. For purposes herein, the term "fiber" is defined as a, macroscopically homogeneous body having a high ratio of length to width across its cross-sectional area perpendicular to its length. The fiber cross section can be any shape, but is typically round, or near round.

The fibrous material may be in any suitable form known to those skilled in the art and is preferably selected from non-woven structures, textiles, fibrous battings and combinations thereof. Non-woven structures can be selected from random fiber orientation or aligned fibrous structures. Examples of random fiber orientation include without limitation chopped fiber and continuous fiber which can be in the form of a mat, a needled mat or a felt. Examples of aligned fibrous structures include without limitation unidirectional fiber strands, bidirectional strands, multidirectional strands, multi-axial textiles. Textiles can be selected from woven forms, knits, braids and combination thereof.

The fibrous material can be continuous or discontinuous in form. Depending on the end-use application of the composite structure and the required mechanical properties, more than one fibrous materials can be used, either by using several same fibrous materials or a combination of different fibrous materials, i.e. the composite structure described herein may comprise one or more fibrous materials. An example of a combination of different fibrous materials is a combination comprising a non-woven structure such as for example a planar random mat which is placed as a central layer and one or more woven continuous fibrous materials that are placed as outside layers. Such a combination allows an improvement of the processing and thereof of the homogeneity of the composite structure thus leading to improved mechanical properties. The fibrous material may be made of any suitable material or a mixture of materials provided that the material or the mixture of materials withstand the processing conditions used during impregnation by the matrix resin composition and the surface resin composition.

Preferably, the fibrous material is made of glass fibers, carbon fibers, aramid fibers, graphite fibers, metal fibers, ceramic fibers, natural fibers or mixtures thereof; more preferably, the fibrous material is made of glass fibers, carbon fibers, aramid fibers, natural fibers or mixtures thereof; and still more preferably, the fibrous material is made of glass fibers, carbon fibers and aramid fibers or mixture mixtures thereof. As mentioned above, more than one fibrous materials can be used. A combination of fibrous materials made of different fibers can be used such as for example a composite structure comprising one or more central layers made of glass fibers or natural fibers and one or more surface layers made of carbon fibers or glass fibers. Preferably, the fibrous material is selected from woven structures, non-woven structures or combinations thereof, wherein said structures are made of glass fibers and wherein the glass fibers are E-glass filaments with a diameter between 8 and 30 µm and preferably with a diameter between 10 to 24 µm.

The fibrous material may be a mixture of a thermoplastic material and the materials described above, for example the fibrous material may be in the form of commingled or co-woven yarns or a fibrous material impregnated with a powder made of the thermoplastic material that is suited to subsequent processing into woven or non-woven forms, or a mixture for use as a uni-directional material.

Preferably, the ratio between the fibrous material and the polymer materials, i.e. the combination of the matrix resin composition and surface resin composition is at least 30% and more preferably between 40 and 60%, the percentage being a volume-percentage based on the total volume of the composite structure.

### Surface Resin Compositions and Matrix Resin Compositions

The matrix resin composition comprises one or more polyamides.

The surface resin composition comprises one or more polyamides having an excess of amine end groups such that the ratio of the amine end groups to the acid end groups (amine:acid or NH₂:COOH) is at least 1.5:1.0.

The one or more polyamides comprised in the matrix resin composition and the one or more polyamides comprised in the surface resin composition may be identicial or different. Polyamides are condensation products of one or more dicarboxylic acids and one or more diamines, and/or one or more aminocarboxylic acids, and/or ring-opening polymerization products of one or more cyclic lactams. The one or more polyamides are independently selected from fully aliphatic polyamide resins, semi-aromatic polyamide resins and mixtures thereof.

The term "semi-aromatic" describes polyamides that comprise at least some monomers containing aromatic groups, in comparison with "fully aliphatic" polyamide which describes polyamides comprising aliphatic carboxylic acid monomer(s) and aliphatic diamine monomer(s).

### Semi-aromatic Polyamides

Semi-aromatic polyamides are homopolymers, copolymers, terpolymers, or higher polymers that are derived from monomers containing aromatic groups. Semi-aromatic polyamides may be derived from one or more aliphatic carboxylic acid components and aromatic diamine components such as for example m-xylylenediamine and p-xylylenediamine, may derived be from one or more aromatic carboxylic acid components and one or more diamine components or may be derived from carboxylic acid components and diamine components. Preferably, semi-aromatic polyamides are formed from one or more aromatic carboxylic acid components and one or more diamine components. The one or more aromatic carboxylic acids can be terephthalic acid or mixtures of terephthalic acid and one or more other carboxylic acids, like isophthalic acid, phthalic acid, substituted phthalic acid such as for example 2-methylterephthalic acid and unsubstituted or substituted isomers of naphthalenedicarboxylic acid, wherein the carboxylic acid component contains at least 55 mole-% of terephthalic acid (the mole-% being based on the carboxylic acid mixture). Preferably, the one or more aromatic carboxylic acids are selected from terephthalic acid and mixtures of terephthalic acid and isophthalic acid, and more preferably, the one or more carboxylic acids are mixtures of terephthalic acid and isophthalic acid, wherein the mixture contains at least 55 mole-% of terephthalic acid. Furthermore, the one or more aromatic carboxylic acids can be mixed with one or more aliphatic carboxylic acids, like adipic acid; pimelic acid; suberic acid; azelaic acid; sebacic acid and dodecanedioic acid, adipic acid being preferred. More preferably the mixture of terephthalic acid and adipic acid comprised in the one or more carboxylic acids mixtures of the semi-aromatic polyamide contains at least 25 mole-% of terephthalic acid.

The one or more semi-aromatic polyamides described herein comprises one or more diamines that can be chosen among diamines having four or more carbon atoms, including, but not limited to tetramethylene diamine, hexamethylene diamine, octamethylene diamine, decamethylene diamine, 2-methylpentamethylene diamine, 2-ethyltetramethylene diamine, 2-methyloctamethylene diamine; trimethylhexamethylene diamine, bis(p-aminocyclohexyl)methane; and/or mixtures thereof.

Preferred examples of semi-aromatic polyamides are independently selected from the group consisting of poly(hexamethylene terephthalamide) (PA 6T), poly(nonamethylene terephthalamide) (PA 9T), poly(decamethylene terephthalamide) (PA 10T), poly(dodecamethylene terephthalamide) (PA 12T), hexamethylene adipamide/hexamethylene terephthalamide copolyamide (PA6T/66), hexamethylene terephthalamide/hexamethylene isophthalamide (PA 6T/6I), poly(m-xylylene adipamide) (PA MXD6), hexamethylene terephthalamide/2-methylpentamethylene terephthalamide copolyamide (PA 6T/DT), hexamethylene adipamide/hexamethylene terephthalamide/hexamethylene isophthalamide copolyamide (PA 66/6T/6I); poly(caprolactam-hexamethylene terephthalamide) (PA 6/6T) and copolymers and blends of the same. More preferred examples of semi-aromatic polyamides are independently selected from the group consisting of PA 6T; PA 6T/6I; PA 6T/66; PA MXD6; PA 6T/DT and copolymers and blends of the same.

Examples of semi-aromatic polyamides useful in the compositions described herein are commercially available under the trademark Zytel® HTN from E. I. du Pont de Nemours and Company, Wilmington, Delaware.

### Fully Aliphatic Polyamides

Fully aliphatic polyamides are homopolymers, copolymers, or terpolymers formed from aliphatic and alicyclic monomers such as diamines, dicarboxylic acids, lactams, aminocarboxylic acids, and their reactive equivalents. Fully aliphatic polyamides preferably consist of aliphatic repeat units derived from monomers selected from one or more of the group consisting of:
i) aliphatic dicarboxylic acids having 6 to 20 carbon atoms and aliphatic diamines having 4 to 20 carbon atoms; and
ii) lactams and/or aminocarboxylic acids having 4 to 20 carbon atoms.

As used herein, the term "fully aliphatic polyamide" also refers to copolymers derived from two or more of such monomers and blends of two or more fully aliphatic polyamides.

Suitable aliphatic dicarboxylic acids having 6 to 20 carbon atoms include adipic acid (C6), pimelic acid (C7), suberic acid (C8), azelaic acid (C9), decanedioic acid (C10), undecanedioic acid (C11), dodecanedioic acid (C12), tridecanedioic acid (C13), tetradecanedioic acid (C14), and pentadecanedioic acid (C15), hexadecanoic acid (C16), octadecanoic acid (C18) and eicosanoic acid (C20).

Suitable aliphatic diamines having 4 to 20 carbon atoms include tetramethylene diamine, hexamethylene diamine, octamethylene diamine, nonamethylenediamine, decamethylene diamine, dodecamethylene diamine, 2-methylpentamethylene diamine, 2-ethyltetramethylene diamine,2-methyloctamethylenediamine, trimethylhexamethylenediamine, and bis(p-aminocyclohexyl)methane.

Suitable lactams are caprolactam and laurolactam.

Preferred fully aliphatic polyamides are independently selected from the group consisting of PA 46, PA 6; PA 66; PA 610; PA 612; PA 613; PA 614; PA 615; PA 616; PA 10; PA 11; PA 12; PA 010; PA 1012; PA 1013; PA 1014; PA 1210; PA 1212; PA 1213; PA 1214 and copolymers and blends of the same. More preferred fully aliphatic polyamides are independently selected from the group consisting of PA 6; PA 11; PA 12; PA 4,6; PA 66; PA10; PA 612; PA 1010 and copolymers and blends of the same. Still more preferred examples of fully aliphatic polyamides are independently selected from the group consisting of PA 66 (poly(hexamethylene adipamide), PA 612 (poly(hexamethylene dodecanoamide) and blends of the same and are commercially available under the trademark Zytel® from E. I. du Pont de Nemours and Company, Wilmington, Delaware.

The one or more polyamides in the surface resin composition have an excess of amine end groups such that the ratio of the amine end groups to the acid end groups (amine:acid or NH₂:COOH) is at least 1.5:1.0. Acid end groups in a polyamide are measured by dissolving a sample of the polymer in hot benzyl alcohol, followed by titration of the acid groups with sodium hydroxide, using phenolphthalein indicator. Amine end groups are determined by titrating a 2 percent solution of polyamide in a phenol/methanol/water mixture (50:25:25 by volume) with 0.1 N hydrochloric acid. The end point may be determined potentiometrically or conductometrically (see Kohan, M.I. Ed. Nylon Plastics Handbook, Hanser: Munich, 1995; p. 79 and Waltz, J.E. and Taylor, G.B., Anal. Chem. 1947 19, 448-50). A convenient description of the proportion of these end groups relative to each other is the number of milli-equivalents (meq) of amine groups present in the polyamide in excess of the number of acid groups per kg of polyamide, see JACS 69, 635-638 (1947).

With the aim of improving the impregnation and/or increasing the impregnation rate of the fibrous material so as to optimize the properties of the composite structure, the melt viscosity of the matrix resin composition may be reduced. In general, it is an advantage to have a flow rate of material as high as possible to make the most efficient use of the processing machine and thereby reduce costs by increasing the impregnation rate of the fibrous material. Int'I. Pat. App. Pub. No. WO 1997/08222 teaches that the melt viscosity or melt flow of polyamides is dramatically improved by unbalancing the acid and amine end groups. The one or more polyamides in the matrix resin composition preferably have unbalanced acid and amine end groups, i.e. the one or more polyamides in the matrix resin composition preferably have an excess of acid end groups or an excess of amine end groups. More preferably, the one or more polyamides in the matrix resin composition have an excess of acid end groups or amine end groups such that the ratio of the end groups in excess to the end groups not in excess (amine:acid or acid:amine) is at least 1.5:1.0; and still more preferably an excess of acid end groups or amine end groups such that the ratio of the end groups in excess to the end groups not in excess (amine:acid or acid:amine) is at least 2.0:1.0; this ratio being calculated by determining the number of acid end groups and amine end groups, and then dividing the larger number by the smaller number, i.e. the number of end groups that are in excess are divided by the number of end groups that are not in excess.

### Making the Polyamides

Polyamides may be prepared by any means known to those skilled in the art, such as in a batch process using, for example, an autoclave or using a continuous process. See, for example, Kohan, M.I. Ed. Nylon Plastics Handbook, Hanser: Munich, 1995; pp. 13-32. Additives such as lubricants, antifoaming agents, and endcapping agents may be added to the polymerization mixture. When polyamides are produced by condensation of equimolar amounts of a dicarboxylic acid with a diamine, the resultant polyamide contains an excess of acid end groups over the amount of amine end groups present. The reason this occurs is that the diamine reactant, such as hexamethylene diamine, is more volatile than the acid reactant, such as adipic acid, leaving, even when a pressure vessel is used, more acid reactant than amine reactant in the condensation zone of the vessel, and consequently, the resulting polymer contains more acid than amine end groups. Therefore, in order to provide the high amine-end polyamide resins useful in the present invention, the concentration of amine ends has to be controlled during the preparation of the polyamide by adjusting the pH to control reaction stoichiometry; and controlling the amount of diamine lost in the polymerization process. An elevated level of amine end groups can be achieved either by using an excess of diamine during its polymerisation with a diacid, or by a subsequent addition of diamines, or of reagents that decompose to give diamines, and so achieve the high ratio of amine:acid end groups. Amine ends may also be adjusted by addition of endcapping agents as is well known in the art. A common endcapping agent is acetic acid.

### Other Components of the Surface Resin Composition and/or Matrix Resin Composition

The surface resin composition and/or the matrix resin composition described herein may further comprise one or more impact modifiers, one or more heat stabilizers, one or more oxidative stabilizers, one or more reinforcing agents, one or more ultraviolet light stabilizers, one or more flame retardant agents or mixtures thereof.

Preferred impact modifiers include those typically used in polyamide compositions, including carboxyl-substituted polyolefins, ionomers and/or mixtures thereof. Carboxyl-substituted polyolefins are polyolefins that have carboxylic moieties attached thereto, either on the polyolefin backbone itself or on side chains. By "carboxylic moieties" it is meant carboxylic groups such as one or more of dicarboxylic acids, diesters, dicarboxylic monoesters, acid anhydrides, and monocarboxylic acids and esters. Useful impact modifiers include dicarboxyl-substituted polyolefins, which are polyolefins that have dicarboxylic moieties attached thereto, either on the polyolefin backbone itself or on side chains. By "dicarboxylic moiety" it is meant dicarboxylic groups such as one or more of dicarboxylic acids, diesters, dicarboxylic monoesters, and acid anhydrides. The impact modifier may be based on an ethylene/alpha-olefin polyolefin such as for example ethylene/octene. Diene monomers such as 1,4-butadiene; 1,4-hexadiene; or dicyclopentadiene may optionally be used in the preparation of the polyolefin. Preferred polyolefins include ethylene-propylene-diene (EPDM) and styrene-ethylene-butadiene-styrene (SEBS) polymers. More preferred polyolefins include ethylene-propylene-diene (EPDM), wherein the term "EPDM" means a terpolymer of ethylene, an alpha olefin having from three to ten carbon atoms, and a copolymerizable non-conjugated diene such as 5-ethylidene-2-norbornene, dicyclopentadiene, 1,4-hexadiene, and the like. As will be understood by those skilled in the art, the impact modifier may or may not have one or more carboxyl moieties attached thereto. The carboxyl moiety may be introduced during the preparation of the polyolefin by copolymerizing with an unsaturated carboxyl-containing monomer. Preferred is a copolymer of ethylene and maleic anhydride monoethyl ester. The carboxyl moiety may also be introduced by grafting the polyolefin with an unsaturated compound containing a carboxyl moiety, such as an acid, ester, diacid, diester, acid ester, or anhydride. A preferred grafting agent is maleic anhydride. Blends of polyolefins, such as polyethylene, polypropylene, and EPDM polymers with polyolefins that have been grafted with an unsaturated compound containing a carboxyl moiety may be used as an impact modifier. The impact modifier may be based on ionomers. By "ionomer", it is meant a carboxyl group containing polymer that has been neutralized or partially neutralized with metal cations such as zinc, sodium, or lithium and the like. Examples of ionomers are described in US patents 3,264,272 and 4,187,358. Examples of suitable carboxyl group containing polymers include, but are not limited to, ethylene/acrylic acid copolymers and ethylene/methacrylic acid copolymers. The carboxyl group containing polymers may also be derived from one or more additional monomers, such as, but not limited to, butyl acrylate. Zinc salts are preferred neutralizing agents. Ionomers are commercially available under the trademark Surlyn® from E.I. du Pont de Nemours and Co., Wilmington, DE. When present, the one or more impact modifiers comprise up to at or about 30 wt-%, or preferably from at or about 3 to at or about 25 wt-%, or more preferably from at or about 5 to at or about 20 wt-%, the weight percentage being based on the total weight of the composition.

The surface resin composition and/or the matrix resin composition described herein may further comprise one or more heat stabilizers. The one or more heat stabilizers may be selected from copper salts and/or derivatives thereof such as for example copper halides or copper acetates; divalent manganese salts and/or derivatives thereof and mixtures thereof. Preferably, copper salts are used in combination with halide compounds and/or phosphorus compounds and more preferably copper salts are used in combination with iodide or bromide compounds, and still more preferably, with potassium iodide or potassium bromide. When present, the one or more heat stabilizers are present in an amount from at or about 0.1 to at or about 3 wt-%, or preferably from at or about 0.1 to at or about 1 wt-%, or more preferably from at or about 0.1 to at or about 0.7 wt-%, the weight percentage being based on the total weight of the composition. The addition of the one or more heat stabilizers improves the thermal stability of the composite structure during its manufacture (i.e. a decreased molecular weight reduction) as well as its thermal stability upon use and time. In addition to the improved heat stability, the presence of the one or more heat stabilizers may allow an increase of the temperature that is used during the impregnation of the composite structure thus reducing the melt viscosity of the matrix resin and/or the polyamide composition described herein. As a consequence of a reduced melt viscosity of the matrix resin and/or the surface resin composition, impregnation rate may be increased.

The surface resin composition and/or the matrix resin composition described herein may further comprise one or more oxidative stabilizers such as phosphorus antioxidants (e.g. phosphite or phosphonite stabilizers), hindered phenol stabilizers, aromatic amine stabilizers, thioesters, and phenolic based anti-oxidants that hinder thermally induced oxidation of polymers where high temperature applications are used. When present, the one or more oxidative stabilizers comprise from at or about 0.1 to at or about 3 wt-%, or preferably from at or about 0.1 to at or about 1 wt-%, or more preferably from at or about 0.1 to at or about 0.7 wt-%, the weight percentage being based on the total weight of the composition.

The surface resin composition and/or the matrix resin composition described herein may further comprise one or more reinforcing agents such as glass fibers, glass flakes, carbon fibers, carbon nanotubes, mica, wollastonite, calcium carbonate, talc, calcined clay, kaolin, magnesium sulfate, magnesium silicate, boron nitride, barium sulfate, titanium dioxide, sodium aluminum carbonate, barium ferrite, and potassium titanate. When present, the one or more reinforcing agents are present in an amount from at or about 1 to at or about 60 wt-%, preferably from at or about 1 to at or about 40 wt-%, or more preferably from at or about 1 to at or about 35 wt-%, the weight percentages being based on the total weight of the composition.

The surface resin composition and/or the matrix resin composition described herein may further comprise one or more ultraviolet light stabilizers such as hindered amine light stabilizers (HALS), carbon black, substituted resorcinols, salicylates, benzotriazoles, and benzophenones.

The surface resin composition and/or the matrix resin composition described herein may further comprise one or more flame retardant agents such as metal oxides (wherein the metal may be aluminum, iron, titanium, manganese, magnesium, zirconium, zinc, molybdenum, cobalt, bismuth, chromium, tin, antimony, nickel, copper and tungsten), metal powders (wherein the metal may be aluminum, iron, titanium, manganese, zinc, molybdenum, cobalt, bismuth, chromium, tin, antimony, nickel, copper and tungsten), metal salts such as zinc borate, zinc metaborate, barium metaborate, zinc carbonate, magnesium carbonate, calcium carbonate and barium carbonate, metal phosphinates (wherein the metal may be aluminum, zinc or calcium), halogenated organic compounds like decabromodiphenyl ether, halogenated polymer such as poly(bromostyrene) and brominated polystyrene, melamine pyrophosphate, melamine cyanurate, melamine polyphosphate, red phosphorus, and the like.

With the aim of increasing the impregnation rate of the fibrous material, the melt viscosity of the compositions may be reduced and especially the melt viscosity of the matrix resin composition. In general, it is an advantage to have a flow rate of material as high as possible to make the most efficient use of the processing machine and thereby reduce costs by increasing the impregnation rate of the fibrous material. For this reason, highly flowable polymer compositions in molten state are of interest. By having a low melt viscosity, highly flowable polymer compositions impregnate faster and are thus easier to be processed. By reducing the melt viscosity of the polymer composition, the rate of the impregnation step may be shortened thereby increasing the overall manufacturing speed and thus leading to an increased productivity of the manufacture of the composite structures and a decrease of energy consumption associated with a shorter cycle time that is beneficial also for environmental concerns. In addition to the improved throughput, the increased impregnation rates also minimize the thermal degradation of the polymer composition. With the aim of reducing the melt viscosity of the matrix resin composition, the matrix resin composition may further comprise one or more rheology modifiers selected from hyperbranched dendrimers (also known as dendritic or highly branched polymers, dendritic macromolecules or arborescent polymers), and more preferably one or more hyperbranched polyester dendrimers. Preferred examples of hyperbranched dendrimers are those described in US 5,418,301 US 2007/0173617. The use of such dendrimers in thermoplastic resins is disclosed in US 6,225,404, US 6,497,959, US 6,663,966, WO 2003/004546, EP 1424360 and WO 2004/111126. This literature teaches that the addition of hyperbranched dendritic polyester macromolecules to thermoplastic compositions leads to improved rheological and mechanical properties due to the reduction of the melt viscosity of the composition and, therefore, lead to an improved processability of the thermoplastic composition. When present, the one or more hyperbranched dendrimers comprise from at or about 0.05 to at or about 10 wt-%, or more preferably from at or about 0.1 to at or about 5 wt-%, the weight percentage being based on the total weight of the matrix resin composition. With the aim of reducing the melt viscosity of the surface resin composition and/or the matrix resin composition so as to improve the impregnation rate of the composite structure, the matrix resin composition may further comprise one or more molecular chain breaking agents. Examples of molecular chain breaking agents include without limitation aliphatic dicarboxylic acids and aromatic dicarboxylic acids. Specific examples thereof are oxalic acid, malonic acid, succinic acid, adipic acid, azelaic acid, sebacic acid, dodecanedioic acid, isomers of phthalic acid. When present, the one or more molecular chain breaking agents comprise from at or about 0.05 to at or about 5 wt-%, or more preferably from at or about 0.1 to at or about 3 wt-%, the weight percentage being based on the total weight of the matrix resin composition.

The surface resin composition and/or the matrix resin composition described herein may further comprise that include, but are not limited to, one or more of the following components as well as combinations of these: flow enhancing additives, lubricants, antistatic agents, coloring agents (including dyes, pigments, carbon black, and the like), flame retardants, nucleating agents, crystallization promoting agents and other processing aids known in the polymer compounding art.

Fillers, modifiers and other ingredients described above may be present in the composition in amounts and in forms well known in the art, including in the form of so-called nano-materials where at least one of the dimensions of the particles is in the range of 1 to 1000 nm.

### Making These Surface Resin Compositions and Matrix Resin Compositions

Preferably, the surface resin compositions and the matrix resin compositions are melt-mixed blends, wherein all of the polymeric components are well-dispersed within each other and all of the non-polymeric ingredients are well-dispersed in and bound by the polymer matrix, such that the blend forms a unified whole. Any melt-mixing method may be used to combine the polymeric components and non-polymeric ingredients of the present invention. For example, the polymeric components and non-polymeric ingredients may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polymeric components and non-polymeric ingredients in a stepwise fashion, part of the polymeric components and/or non-polymeric ingredients are first added and melt-mixed with the remaining polymeric components and non-polymeric ingredients being subsequently added and further melt-mixed until a well-mixed composition is obtained.

### Making These Composite Structures

Depending on the end-use application, the composite structure described herein may have any shape. Preferably, the composite structure described herein is in the form of a sheet structure.

Also described herein are processes for making the composite structures described above and the composite structures obtained thereof. The processes comprise a step of i) impregnating with the matrix resin composition the fibrous material, wherein at least a portion of the surface of the composite structure is made of the surface resin composition. Preferably, the fibrous material is impregnated with the matrix resin by thermopressing. During thermopressing, the fibrous material, the matrix resin composition and the surface resin composition undergo heat and pressure in order to allow the plastics to melt and penetrate through the fibrous material and, therefore, to impregnate said fibrous material.
Typically, thermopressing is made at a pressure between 2 and 100 bars and more preferably between 10 and 40 bars and a temperature which is above the melting point of the matrix resin composition and the polyamide composition, preferably at least about 20°C above the melting point to enable a proper impregnation. The heating step may be done by a variety of thermal means, including contact heating, radiant gas heating, infra red heating, convection or forced convection air heating or microwave heating. The driving impregnation pressure can be applied by a static process or by a continuous process (also known as dynamic process), a continuous process being preferred. Examples of impregnation processes include without limitation vacuum molding, in-mold coating, cross-die extrusion, pultrusion, wire coating type processes, lamination, stamping, diaphragm forming or press-molding, lamination being preferred. During lamination, heat and pressure are applied to the fibrous material, the matrix resin composition and the surface resin composition through opposing pressured rollers in a heating zone. Examples of lamination techniques include without limitation calendering, flatbed lamination and double-belt press lamination. When lamination is used as the impregnating process, preferably a double-belt press is used for lamination.

The matrix resin composition and the surface resin composition are applied to the fibrous material by conventional means such as for example powder coating, film lamination, extrusion coating or a combination of two or more thereof, provided that the surface resin composition is applied on at least a portion of the surface of the composite structure so as to be accessible if an overmolding resin is applied onto the composite structure.

During a powder coating process, a polymer powder which has been obtained by conventional grinding methods is applied to the fibrous material. The powder may be applied onto the fibrous material by scattering, sprinkling, spraying, thermal or flame spraying, or fluidized bed coating methods. Optionally, the powder coating process may further comprise a step which consists in a post sintering step of the powder on the fibrous material. The matrix resin composition and the surface resin composition are applied to the fibrous material such that at least of portion of surface of the composite structure is made of the surface resin composition. Subsequently, thermopressing is achieved on the powder coated fibrous material, with an optional preheating of the powdered fibrous material outside of the pressurized zone. During film lamination, one or more films made of the matrix resin composition and one or more films made of the surface resin composition which have been obtained by conventional extrusion methods known in the art such as for example blow film extrusion, cast film extrusion and cast sheet extrusion are applied to the fibrous material. Subsequently, thermopressing is achieved on the assembly comprising the one or more films made of the matrix resin composition and the one or more films made of the surface resin composition and the one or more fibrous materials. In the resulting composite structure, the film resins have penetrated into the fibrous material as a polymer continuum surrounding the fibrous material. During extrusion coating, pellets and/or granulates made of the matrix resin composition and pellets and/or granulates made of the surface resin composition are extruded through one or more flat dies so as to form one or more melt curtains which are then applied onto the fibrous material by laying down the one or more melt curtains.

Also described herein are processes for making the composite structures described herein, wherein the processes comprise a step of applying a surface resin composition to at least a portion of the surface of the fibrous material which is impregnated with a matrix resin composition described herein.

Depending on the end-use application, the composite structure obtained under step i) may be shaped into a desired geometry or configuration, or used in sheet form. The process for making a composite structure described herein may further comprise a step ii) of shaping the composite structure, said step arising after the impregnating step i). The step of shaping the composite structure obtained under step i) may be done by compression molding, stamping, direct forming in an injection molding machine, or any technique using heat and/or pressure. Preferably, pressure is applied by using a hydraulic molding press. During compression molding or stamping, the composite structure is preheated to a temperature above the melt temperature of the surface resin composition and is transferred to a forming means such as a molding press containing a mold having a cavity of the shape of the final desired geometry whereby it is shaped into a desired configuration and is thereafter removed from the press or the mold after cooling to a temperature below the melt temperature of the surface resin composition.

Also described herein are uses of the surface resin composition comprising one or more polyamides having an excess of amine end groups such that the ratio of the amine end groups to the acid end groups is at least 1.5:1.0 described herein in the manufacture of a composite structure having a surface, which surface has at least a portion made of the surface resin composition and comprising a fibrous material selected from non-woven structures, textiles, fibrous battings and combinations thereof, said fibrous material being impregnated with a matrix resin composition comprising one or more polyamides for decreasing the sticking or adhesion of the surface of the composite structure onto a metal piece.

### OVERMOLDED COMPOSITE STRUCTURES

In another aspect, the present invention relates to overmolded composite structures and processes to make them. The overmolded composite structure according to the present invention comprises at least two components, i.e. a first component and a second component. The first component consists of the composite structure described above and the second component comprises an overmolding resin composition. The overmolded composite structure may comprise more than one first components, i.e. it may comprise more than one composite structures.

The overmolding resin composition comprises one or more polyamides such as those described herein for the matrix resin compositions and the surface resin compositons. The overmolding resin composition described herein may further comprise one or more impact modifiers, one or more heat stabilizers, one or more oxidative stabilizers, one or more reinforcing agents, one or more ultraviolet light stabilizers, one or more flame retardant agents or mixtures thereof such as those described above for the surface resin composition and/or the matrix resin composition. When comprised in the overmolding resin compositions, these additives are present in amounts described above for the surface resin composition and/or the matrix resin composition.

The second component is adhered to the first component over at least a portion of the surface of said first component, said portion of the surface being made of the surface resin composition described above. The first component, i.e. the composite structure, may be fully or partially encapsulated by the second component. Preferably, the first component, i.e. the composite structure described above, is in the form of a sheet structure.

The overmolding resin compositions described herein are preferably melt-mixed blends, wherein all of the polymeric components are well-dispersed within each other and all of the non-polymeric ingredients are well-dispersed in and bound by the polymer matrix, such that the blend forms a unified whole. Melt-mixing methods that can be used are described above for the preparation of the polyamide surface resin compositions and the matrix resin compositions.

### Making the Overmolded Composite Structures

In another aspect, the present invention relates to a process for making the overmolded composite structures described above and the overmolded composite structures obtained thereof. The process for making the overmolded composite structure comprising a step of overmolding the first component, i.e. the composite structure described above, with the overmolding resin composition. By "overmolding", it is meant that a second component is molded onto at least one portion of the surface of a first component.

The first component, i.e. the composite structure described above, is positioned in a molding station comprising a mold having a cavity defining the greater portion of the outer surface configuration of the final overmolded composite structure. The overmolding resin composition may be overmolded on one side or on both sides of the composite structure and it may fully or partially encapsulate the first component. After having positioned the first component in the molding station, the overmolding resin composition is then introduced in a molten form. The first component and the second component are adhered together by overmolding.

The overmolding process includes that the second component is molded in a mold already containing the first component, the latter having been manufactured beforehand as described above, so that first and second components are adhered to each other over at least a portion of the surface of said first component. The at least two parts are preferably adhered together by injection or compression molding as an overmolding step, and more preferably by injection molding. When the overmolding resin composition is introduced in a molten form in the molding station so as to be in contact with the first component, at least a thin layer of an element of the first component is melted and becomes intermixed with the overmolding resin composition.

Depending on the end-use application, the first component, i.e. the composite structure, may be shaped into a desired geometry or configuration prior to the step of overmolding the overmolding resin composition. As mentioned above, the step of shaping the first component, i.e. the composite structure, may done by compression molding, stamping or any technique using heat and pressure, compression molding and stamping being preferred. During stamping, the first component, i.e. the composite structure, is preheated to a temperature above the melt temperature of the surface resin composition and is transferred to a stamping press or a mold having a cavity of the shape of the final desired geometry and it is then stamped into a desired configuration and is thereafter removed from the press or the mold. With the aim of improving the adhesion between the overmolding resin and the surface resin composition, the surface of the first component, i.e. the composite structure, may be a textured surface so as to increase the relative surface available for overmolding. Such textured surface may be obtained during the step of shaping by using a press or a mold having for example porosities or indentations on its surface.

Alternatively, a one step process comprising the steps of shaping and overmolding the first component in a single molding station may be used. This one step process avoids the step of compression molding or stamping the first component in a mold or a press, avoids the optional preheating step and the transfer of the preheated first component to the molding station. During this one step process, the first component, i.e. the composite structure, is heated outside, adjacent to or within the molding station, to a temperature at which the first component is conformable or shapable during the overmolding step. In such a one step process, the molding station comprises a mold having a cavity of the shape of the final desired geometry. The shape of the first component is thereby obtained during overmolding.

### Articles

The composite structures and overmolded composite structures described herein may be used in a wide variety of applications such as for example as components for automobiles, trucks, commercial airplanes, aerospace, rail, household appliances, computer hardware, hand held devices, recreation and sports, structural component for machines, structural components for buildings, structural components for photovoltaic or wind energy equipments or structural components for mechanical devices. These applications include making, remaking, or repairing components for automobiles, trucks, commercial airplanes, aerospace, rail, household appliances, computer hardware, hand held devices, recreation and sports, structural component for machines, structural components for buildings, structural components for photovoltaic or wind energy equipment or structural components for mechanical devices.

Examples of automotive applications include without limitation seating components and seating frames, engine cover brackets, engine cradles, suspension arms and cradles, spare tire wells, chassis reinforcement, floor pans, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles and fire extinguishers and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, computers.

### EXAMPLES

The following materials were used for preparing the composites structures according to the present invention and comparative examples.

### Materials

The materials below make up the compositions used in the Examples and Comparative Examples.
Polyamide 1: a melt-mixed composition prepared by melt blending ingredients a) and b) in a twin screw extruder. The composition comprised:
   a) a polyamide 6,6 made of adipic acid and 1,6-hexamethylenediamine with a weight average molecular weight (GPC) of about 32000 Daltons, an average amine end group concentration of 20 meq/kg, an average carboxylic acid end group concentration of 75 meq/kg, a relative viscosity (according to ASTM D-789 method) of about 50 and a melting point of about 265°C, and
   b) 1.5 wt-% of dipentaerythritol (commercially available from Perstorp Speciality Chemicals AB, Perstorp, Sweden as Di-Penta 93).
Polyamide 2: polyamide 6T/DT made of terephthalic acid and 1,6-hexamethylenediamine (HMD) and 2-methylpentamethylenediamine (MPMD) (HMD:MPMD = 50:50). This polyamide has a weight average molecular weight (GPC) of about 33600 Daltons, an average amine end group concentration of 50 meq/kg and an average carboxylic acid end group concentration of 45 meq/kg, an inherent viscosity (measured in meta-cresol according to ISO 309 method) of about 0.88 and a melting point of about 300°C.
Polyamide 3: a polyamide 6,6 made of adipic acid and 1,6-hexamethylenediamine with a weight average molecular weight (GPC) of about 32000 Daltons, an average amine end group concentration of 90 meq/kg, an average carboxylic acid end group concentration of 35 meq/kg, a relative viscosity (according to ASTM D-789 method) of about 45 and a melting point of about 265°C.
Polyamide 4: a melt-mixed composition prepared by melt blending ingredients a) and b) in a twin screw extruder. The composition comprised:
   a) a polyamide PA66/6T made from a) group A monomers consisting of terephthalic acid and hexamethylenediamine; and b) group B monomers consisting of adipic acid and hexamethylenediamine, wherein the monomers of group A are present in an amount of 25 mole-percent and the monomers of group B are present in an amount of 75 mole-percent, the weight percentages being based on the polyamide. This polyamide has a weight average molecular weight (GPC) of about 29000 Daltons, an average amine end group concentration of 80 meq/kg, an average carboxylic acid end group concentration of 42 meq/kg, a relative viscosity (according to ASTM D-789 method) of about 42 and a melting point of about 268°C, and
   b) 1.5 wt-% of dipentaerythritol (commercially available from Perstorp Speciality Chemicals AB, Perstorp, Sweden as Di-Penta 93).

Polyamides (PA1-PA4) listed in Table 1 were cast into about 100 micron films using a twin screw extruder equipped with a 2 m wide film die and a casting roll. The films were processed at about 27-29 meter per minute line speed and about 400-450 kg/hour throughput with a melt temperature of about 280°C and cast roll temperature at about 60°C. The so-obtained films had a thickness of about 102 microns. Preparation of the composite structures.

The composite structures C1-C2 and E1-E2 were prepared by stacking eight layers made of the polyamides listed in Table 1 and three layers of woven continuous glass fiber textile (E-glass fibers having a diameter of 17 microns, 0.4% of a silane-based sizing and a nominal roving tex of 1200 g/km that have been woven into a 2/2 twill (balanced weave) with an areal weight of 600 g/m²) so as to form assemblies comprising in the following sequence: two layers of layers made of the polyamides listed in Table 1, one layer of woven continuous glass fiber textile, two layers of layers made of the polyamides listed in Table 1, one layer of woven continuous glass fiber textile, two layers of layers made of the polyamides listed in Table 1, one layer of woven continuous glass fiber textile and two layers made of the polyamides listed in Table 1. The composite structures listed in Table 1 had an overall thickness of about 1.5 mm.
The composite structures C1-C2 and E1-E2 listed in Table 1 were prepared by compression moulding in a Dr. Collin press a so-obtained assembly between one metal plate having a thickness of 2 mm covered by a metal foil having a thickness of 0.2 mm and coated with a release agent (Frekote® 55-NC) on each side of the assembly. Compression molding was done according to the following conditions: 1) preheating the assemblies for 25 seconds at 340°C (for C1, E1 and E2) and 420°C (for C2) at a set pressure of 110 bar (actual pressure: 19.1 bar); 2) maintaining these conditions for an additional time of 40 seconds, 3) cooling the assemblies for 60 seconds at 110 bar and 40°C and 4) opening the press so as to recover the so-obtained composite structures.
The tendency of the surface of the composite structures not to stick or adhere to metal was assessed by visual inspection of the metal foil covering the metal plate of the press after the manufacture of the composite structures. A "0" value means the best performance, i.e. no sticking and a "5" value means a high sticking. A "0" value means that there is almost no deposit on the metal surface. A "5" value means that there is a continuous layer of polymer deposited on the metal surface after having been removed from the composite structure, with the fiber structure of the composite structure reproduced as a recognizable pattern of the deposit.

| | Comparative composite structure C1 | Comparative composite structure C2 | Composite structure E1 | Composite structure E2 |
|---|---|---|---|---|
| polyamide | Polyamide 1 (PA 6,6) | Polyamide 2 (PA 6T/DT) | Polyamide 3 (PA 6,6) | Polyamide 4 (PA 66/6T) |
| average amine end group concentration | 20 meq/kg | 50 meq/kg | 90 meq/kg | 80 meq/kg |
| average acid end group concentration | 75 meq/kg | 45 meq/kg | 35 meq/kg | 42 meq/kg |
| ratio NH₂:COOH | 0.27 | 1.1 | 2.6 | 1.9 |
| metal sticking rating | 2 | 5 | 0 | 1 |

## Claims

1. A composite structure having a surface, which surface has at least a portion made of a surface resin composition comprising one or more polyamides having an excess of amine end groups such that the ratio of the amine end groups to the acid end groups is at least 1.5:1.0, and comprising a fibrous material selected from non-woven structures, textiles, fibrous battings and combinations thereof, said fibrous material being impregnated with a matrix resin composition comprising one or more polyamides, wherein the one or more polyamides are independently selected from the group consisting of semi-aromatic polyamide resins and a mixture thereof with fully aliphatic polyamide resins.

2. The composite structure of claim 1, wherein the fibrous material is made of glass fibers, carbon fibers, aramid fibers, natural fibers or mixtures thereof.

3. The composite structure of claim 1, wherein the semi-aromatic polyamides are independently selected from the group consisting of PA 6T; PA 6I/6T; PA6T/66, PA MXD6; PA 6T/DT and copolymers and blends of the same.

4. The composite structure of claim 1, wherein the aliphatic polyamide resins are independently selected from the group consisting of PA 6; PA 11; PA 12; PA 46; PA 66; PA 10; PA 612; PA 1010 and copolymers and blends of the same.

5. The composite structure of any preceding claims, wherein the one or more polyamides comprised in the matrix resin composition have an excess of acid end groups or amine end groups such that the ratio of the end groups in excess to the end groups not in excess (amine:acid or acid:amine) is at least 1.5:1.0.

6. The composite structure of any preceding claims, wherein the matrix resin composition and/or the surface resin composition further comprise one or more impact modifiers, one or more heat stabilizers, one or more oxidative stabilizers, reinforcing agents, one or more ultraviolet light stabilizers, one or more flame retardant agents, or mixtures thereof.

7. The composite structure of any preceding claim in the form of a sheet structure.

8. The composite structure of any preceding claim in the form of components for automobiles, trucks, commercial airplanes, aerospace, rail, household appliances, computer hardware, hand held devices, recreation and sports, structural component for machines, structural components for buildings, structural components for photovoltaic or wind energy equipments or structural components for mechanical devices.

9. A process for making a composite structure having a surface, said process comprises a step of:
i) impregnating with the matrix resin composition recited in claim 1 or in any one of claim 3 to 7 the fibrous material selected from non-woven structures, textiles, fibrous battings and combinations thereof recited in claim 1 or 2, wherein at least a portion of the surface of the composite structure is made of the surface resin composition recited in claim 1 or in any one of claims 3 to 5 or claim 7,
ii) of shaping the composite structure, said step arising after step i).

10. A use of the surface resin composition recited in claim 1 or in any one of claims 3 to 4 or claim 6 in the manufacture of a composite structure having a surface, which surface has at least a portion made of the surface resin composition and comprising the fibrous material selected from non-woven structures, textiles, fibrous battings and combinations thereof recited in claim 1 or 2, said fibrous material being impregnated with the matrix resin composition recited in claim 1 or in any one of claim 3 to 6 for decreasing the sticking or adhesion of the surface of the composite structure onto a metal piece, or for making, remaking, or repairing components for automobiles, trucks, commercial airplanes, aerospace, rail, household appliances, computer hardware, hand held devices, recreation and sports, structural component for machines, structural components for buildings, structural components for photovoltaic or wind energy equipments or structural components for mechanical devices.

11. An overmolded composite structure comprising:
i) a first component having a surface, which surface has at least a portion made of the surface resin composition recited in claim 1 or in any one of claims 3 to 4 or claim 6, and comprising the fibrous material selected from non-woven of the surface resin composition recited in claim 1 or in any one of claims 3 to 4 structures, textiles, fibrous battings and combinations thereof recited in any one of claims 1 to 2, said fibrous material being impregnated with the matrix resin composition recited in claim 1 or in any one of claims 3 to 6,
ii) a second component comprising an overmolding resin composition comprising one or more polyamides, wherein said second component is adhered to said first component over at least a portion of the surface of said first component.

12. The overmolded composite structure of claim 11 in the form of components for automobiles, trucks, commercial airplanes, portion of the surface of said first component. aerospace, rail, household appliances, computer hardware, hand held devices, recreation and sports, structural component for machines, structural components for buildings, structural components for photovoltaic or wind energy equipments or structural components for mechanical devices.

13. A process for making an overmolded composite structure comprising a step of overmolding a second component comprising an overmolding resin composition on a first component,
wherein the first component comprises the fibrous material selected from non-woven structures, textiles, fibrous battings and combinations thereof recited in claim 1 or 2, said surface having at least a portion made of the surface resin composition recited in claim 1 or in any of claims 3 to 4 or claim 6,
and said fibrous material being impregnated with the matrix resin composition recited in claim 1 or in any of claims 3 to 6. said surface having at least a portion made of the surface resin composition recited and said fibrous material being impregnated with the matrix resin composition recited.

## Patentansprüche

1. Verbundstruktur, aufweisend eine Oberfläche, wobei die Oberfläche zumindest einen Teil aufweist, der aus einer Oberflächen-Harzzusammensetzung hergestellt wird, die ein oder mehrere Polyamide umfasst, die einen Überschuss von Amin-Endgruppen aufweisen, sodass das Verhältnis der Amin-Endgruppen zu Säure-Endgruppen bei zumindest 1,5:1,0 liegt, und umfassend ein Fasermaterial, ausgewählt aus nicht gewebten Strukturen, Textilien, faserigen Wattierungen und Kombinationen davon, wobei das Fasermaterial mit einer Matrix-Harzzusammensetzung imprägniert ist, die ein oder mehrere Polyamide umfasst, wobei das eine oder die mehreren Polyamide unabhängig voneinander aus der Gruppe bestehend aus halbaromatischen Polyamidharzen und einem Gemisch davon mit voll aliphatischen Polyamidharzen ausgewählt werden.

2. Verbundstruktur nach Anspruch 1, wobei das Fasermaterial aus Glasfasern, Kohlenstofffasern, Aramidfasern, Naturfasern oder einem Gemisch davon hergestellt wird.

3. Verbundstruktur nach Anspruch 1, wobei die halbaromatischen Polyamide unabhängig voneinander aus der Gruppe bestehend aus PA 6T; PA 6I/6T; PA6T/66, PA2 MXD6; PA 6T/DT und Copolymeren und Mischungen derselben ausgewählt werden.

4. Verbundstruktur nach Anspruch 1, wobei die aliphatischen Polyamidharze unabhängig voneinander aus der Gruppe bestehend aus PA 6; PA 11; PA 12; PA 46; PA 66; PA 10; PA 612; PA 1010 und Copolymeren und Mischungen derselben ausgewählt werden.

5. Verbundstruktur nach einem der vorhergehenden Ansprüche, wobei das eine oder die mehreren Polyamide, die in der Matrix-Harzzusammensetzung enthalten sind, einen Überschuss von Säure-Endgruppen oder Amin-Endgruppen aufweisen, sodass das Verhältnis der überschüssigen Endgruppen zu den nicht überschüssigen Endgruppen (Amin:Säure oder Säure:Amin) zumindest bei 1,5:1,0 liegt.

6. Verbundstruktur nach einem der vorhergehenden Ansprüche, wobei die Matrix-Harzzusammensetzung und/oder die Oberflächen-Harzzusammensetzung ferner ein oder mehrere Schlagzäh-Modifizierungsmittel, einen oder mehrere Wärmestabilisatoren, einen oder mehrere oxidative Stabilisatoren, Verstärkungsmittel, einen oder mehrere Ultraviolettlicht-Stabilisatoren, ein oder mehrere flammhemmende Mittel oder Gemische davon umfassen.

7. Verbundstruktur nach einem der vorhergehenden Ansprüche in der Form einer Folienstruktur.

8. Verbundstruktur nach einem der vorhergehenden Ansprüche in der Form von Komponenten für Automobile, Lastkraftwagen, kommerzielle Flugzeuge, Raumfahrt, Bahn, Haushaltsgeräte, Computerhardware, Handgeräte, Freizeit und Sport, Strukturkomponenten für Maschinen, Strukturkomponenten für Gebäude, Strukturkomponenten für Photovoltaik- oder Windkraftanlagen oder Strukturkomponenten für mechanische Geräte.

9. Verfahren zum Herstellen einer Verbundstruktur, die eine Oberfläche aufweist, wobei das Verfahren die folgenden Schritte umfasst:
i) Imprägnieren mit der Matrix-Harzzusammensetzung nach Anspruch 1 oder nach einem der Ansprüche 3 bis 7 des Fasermaterials, ausgewählt aus nicht gewebten Strukturen, Textilien, faserigen Wattierungen und Kombinationen davon nach Anspruch 1 oder 2, wobei zumindest ein Teil der Oberfläche der Verbundstruktur aus der Oberflächen-Harzzusammensetzung nach Anspruch 1 oder nach einem der Ansprüche 3 bis 5 oder Anspruch 7 hergestellt wird,
ii) Formen der Verbundstruktur, wobei der Schritt nach Schritt i) stattfindet.

10. Verwendung der Oberflächen-Harzzusammensetzung nach Anspruch 1 oder nach einem der Ansprüche 3 bis 4 oder Anspruch 6 bei der Herstellung einer Verbundstruktur, aufweisend eine Oberfläche, wobei die Oberfläche zumindest einen Teil aufweist, der aus einer Oberflächen-Harzzusammensetzung hergestellt wird, und umfassend das Fasermaterial, ausgewählt aus nicht gewebten Strukturen, Textilien, faserigen Wattierungen und Kombinationen davon nach Anspruch 1 oder 2, wobei das Fasermaterial mit der Matrix-Harzzusammensetzung nach Anspruch 1 oder nach einem der Ansprüche 3 bis 6 zum Verringern des Klebens oder der Haftung der Oberfläche der Verbundstruktur auf einem Metallstück oder zum Herstellen, Wiederherstellen oder Reparieren von Komponenten für Automobile, Lastkraftwagen, kommerzielle Flugzeuge, Raumfahrt, Bahn, Haushaltsgeräte, Computerhardware, Handgeräte, Freizeit und Sport, Strukturkomponenten für Maschinen, Strukturkomponenten für Gebäude, Strukturkomponenten für Photovoltaik- oder Windkraftanlagen oder Strukturkomponenten für mechanische Geräte imprägniert ist.

11. Umgespritzte Verbundstruktur, umfassend:
i) eine erste Komponente, aufweisend eine Oberfläche, wobei die Oberfläche zumindest einen Teil aufweist, der aus der Oberflächen-Harzzusammensetzung nach Anspruch 1 oder nach einem der Ansprüche 3 bis 4 oder Anspruch 6 hergestellt wird, und umfassend das Fasermaterial ausgewählt aus nicht gewebten Strukturen, Textilien, faserigen Wattierungen und Kombinationen davon nach einem der Ansprüche 1 bis 2, wobei das Fasermaterial mit der Matrix-Harzzusammensetzung nach Anspruch 1 oder nach einem der Ansprüche 3 bis 6 imprägniert wird,
ii) eine zweite Komponente, umfassend eine umgespritzte Harzzusammensetzung, die ein oder mehrere Polyamide umfasst,
wobei die zweite Komponente auf die erste Komponente über zumindest einen Teil der Oberfläche der ersten Komponente aufgeklebt wird.

12. Umgespritzte Verbundstruktur nach Anspruch 11 in der Form von Komponenten für Automobile, Lastkraftwagen, kommerzielle Flugzeuge, Raumfahrt, Bahn, Haushaltsgeräte, Computerhardware, Handgeräte, Freizeit und Sport, Strukturkomponenten für Maschinen, Strukturkomponenten für Gebäude, Strukturkomponenten für Photovoltaik- oder Windkraftanlagen oder Strukturkomponenten für mechanische Geräte.

13. Verfahren zum Herstellen einer umgespritzten Verbundstruktur, umfassend einen Schritt des Umspritzens einer zweiten Komponente, umfassend eine Umspritz-Harzzusammensetzung auf einer ersten Komponente,
wobei die erste Komponente das Fasermaterial, ausgewählt aus nicht gewebten Strukturen, Textilien, faserigen Wattierungen und Kombinationen davon, nach Anspruch 1 oder 2 umfasst,
wobei die Oberfläche zumindest einen Teil aufweist, der aus der Oberflächen-Harzzusammensetzung nach Anspruch 1 oder nach einem der Ansprüche 3 bis 4 oder Anspruch 6 hergestellt wird,
und wobei das Fasermaterial mit der Matrix-Harzzusammensetzung nach Anspruch 1 oder nach einem der Ansprüche 3 bis 6 imprägniert wird.

## Revendications

1. Structure composite ayant une surface, laquelle surface comporte au moins une partie fabriquée à partir d'une composition de résine de surface comprenant un ou plusieurs polyamides ayant un excès de groupes terminaux amine de sorte que le rapport des groupes terminaux amine aux groupes terminaux acide soit d'au moins 1,5/1,0, et comprenant un matériau fibreux choisi parmi les structures non tissées, les textiles, les feutres de coton fibreux et les combinaisons de ceux-ci, ledit matériau fibreux étant imprégné d'une composition de résine de matrice comprenant un ou plusieurs polyamides, dans laquelle les un ou plusieurs polyamides sont indépendamment choisis dans le groupe constitué des résines de polyamide semi-aromatique et d'un mélange de celles-ci avec des résines de polyamide entièrement aliphatique.

2. Structure composite selon la revendication 1, dans laquelle le matériau fibreux est fabriqué à partir de fibres de verre, de fibres de carbone, de fibres d'aramide, de fibres naturelles ou de mélanges de celles-ci.

3. Structure composite selon la revendication 1, dans laquelle les polyamides semi-aromatiques sont indépendamment choisis dans le groupe constitué du PA 6T ; du PA 6I/6T ; du PA6T/66, du PA MXD6 ; du PA 6T/DT et des copolymères et des assemblages de ceux-ci.

4. Structure composite selon la revendication 1, dans laquelle les résines de polyamide aliphatique sont indépendamment choisies dans le groupe constitué du PA 6 ; du PA 11 ; du PA 12 ; du PA 46 ; du PA 66 ; du PA 10 ; du PA 612 ; du PA 1010 et des copolymères et des assemblages de ceux-ci.

5. Structure composite selon l'une quelconque des revendications précédentes, dans laquelle les un ou plusieurs polyamides compris dans la composition de résine de matrice ont un excès de groupes terminaux acide ou de groupes terminaux amine de sorte que le rapport des groupes terminaux en excès aux groupes terminaux non en excès (amine/acide ou acide/amine) est d'au moins 1,5/1,0.

6. Structure composite selon l'une quelconque des revendications précédentes, dans laquelle la composition de résine de matrice et/ou la composition de résine de surface comprennent en outre un ou plusieurs modificateurs de résistance aux chocs, un ou plusieurs stabilisants thermiques, un ou plusieurs stabilisants contre la dégradation oxydative, des agents renforçants, un ou plusieurs stabilisants contre la lumière ultraviolette, un ou plusieurs agents ignifuges, ou des mélanges de ceux-ci.

7. Structure composite selon l'une quelconque des revendications précédentes sous la forme d'une structure de film.

8. Structure composite selon l'une quelconque des revendications précédentes sous la forme de composants pour automobiles, camions, avions commerciaux, le domaine aérospatial, le domaine ferroviaire, appareils ménagers, matériel informatique, dispositifs mobiles, matériels récréatifs et sportifs, élément de structure pour les machines, éléments de structure pour les bâtiments, éléments de structure pour les équipements photovoltaïques ou éoliens ou éléments de structure pour les dispositifs mécaniques.

9. Procédé de fabrication d'une structure composite ayant une surface, ledit procédé comprenant une étape:
i) d'imprégnation, avec la composition de résine de matrice énoncée dans la revendication 1 ou dans l'une quelconque des revendications 3 à 7, du matériau fibreux choisi parmi les structures non tissées, les textiles, les feutres de coton fibreux et les combinaisons de ceux-ci énoncés dans la revendication 1 ou 2, au moins une partie de la surface de la structure composite étant fabriquée à partir de la composition de résine de surface énoncée dans la revendication 1 ou dans l'une quelconque des revendications 3 à 5 ou la revendication 7,
ii) de mise en forme de la structure composite, ladite étape étant réalisée après l'étape i).

10. Utilisation de la composition de résine de surface énoncée dans la revendication 1 ou dans l'une quelconque des revendications 3 à 4 ou la revendication 6 dans la fabrication d'une structure composite ayant une surface, laquelle surface comporte au moins une partie fabriquée à partir de la composition de résine de surface et comprenant le matériau fibreux choisi parmi les structures non tissées, les textiles, les feutres de coton fibreux et les combinaisons de ceux-ci énoncés dans la revendication 1 ou 2, ledit matériau fibreux étant imprégné de la composition de résine de matrice énoncée dans la revendication 1 ou dans l'une quelconque des revendications 3 à 6 pour réduire le collant ou l'adhérence de la surface de la structure composite sur une pièce métallique, ou pour fabriquer, remodeler ou réparer des composants pour automobiles, camions, avions commerciaux, le domaine aérospatial, le domaine ferroviaire, appareils ménagers, matériel informatique, dispositifs mobiles, matériels récréatifs et sportifs, élément de structure pour les machines, éléments de structure pour les bâtiments, éléments de structure pour les équipements photovoltaïques ou éoliens ou éléments de structure pour les dispositifs mécaniques.

11. Structure composite surmoulée comprenant :
i) un premier composant ayant une surface, laquelle surface comporte au moins une partie fabriquée à partir de la composition de résine de surface énoncée dans la revendication 1 ou dans l'une quelconque des revendications 3 à 4 ou la revendication 6,
et comprenant le matériau fibreux choisi parmi les structures non tissées, les textiles, les feutres de coton fibreux et les combinaisons de ceux-ci énoncés dans l'une quelconque des revendications 1 à 2, ledit matériau fibreux étant imprégné de la composition de résine de matrice énoncée dans la revendication 1 ou dans l'une quelconque des revendications 3 à 6,
ii) un second composant comprenant une composition de résine de surmoulage comprenant un ou plusieurs polyamides,
dans laquelle ledit second composant est fixé sur ledit premier composant sur au moins une partie de la surface dudit premier composant.

12. Structure composite surmoulée selon la revendication 11 sous la forme de composants pour automobiles, camions, avions commerciaux, le domaine aérospatial, le domaine ferroviaire, appareils ménagers, matériel informatique, dispositifs mobiles, matériels récréatifs et sportifs, élément de structure pour les machines, éléments de structure pour les bâtiments, éléments de structure pour les équipements photovoltaïques ou éoliens ou éléments de structure pour les dispositifs mécaniques.

13. Procédé de fabrication d'une structure composite surmoulée comprenant une étape de surmoulage d'un second composant comprenant une composition de résine de surmoulage sur un premier composant,
dans lequel le premier composant comprend le matériau fibreux choisi parmi les structures non tissées, les textiles, les feutres de coton fibreux et les combinaisons de ceux-ci énoncés dans la revendication 1 ou 2,
ladite surface ayant au moins une partie fabriquée à partir de la composition de résine de surface énoncée dans la revendication 1 ou dans l'une quelconque des revendications 3 à 4 ou la revendication 6,
et ledit matériau fibreux étant imprégné de la composition de résine de matrice énoncée dans la revendication 1 ou dans l'une quelconque des revendications 3 à 6.
